# EUROPÄISCHE PATENTSCHRIFT

(11) **EP 3 071 459 B1**
(45) Veröffentlichungstag und Bekanntmachung des Hinweises auf die Patenterteilung: **08.01.2020**
(21) Anmeldenummer: 14789997.5
(22) Anmeldetag: 23.10.2014
(51) Int. Cl.: B60T 8/88, B60T 8/17

(54) **ÜBERPRÜFUNG DER VERBAUUNGSPOSITION VON ACHSMODULATOREN ANHAND VON STÖRUNGEN IN GESCHWINDIGKEITSSIGNALEN**
CHECKING OF THE INSTALLATION POSITION OF AXLE MODULATORS ON THE BASIS OF DISTURBANCES IN SPEED SIGNALS
CONTRÔLE DE LA POSITION DE FIXATION DE MODULATEURS D'ESSIEU À PARTIR DE PERTURBATIONS DANS LES SIGNAUX DE VITESSE

(30) Priorität: 21.11.2013 DE 102013019512
(43) Veröffentlichungstag der Anmeldung: 28.09.2016
(73) Patentinhaber: WABCO GmbH, 30453 Hannover (DE)
(72) Erfinder: GERECKE, Marc, 30419 Hannover (DE); OTREMBA, Robert, 30952 Ronnenberg (DE); STRUWE, Otmar, 30519 Hannover (DE)
(74) Vertreter: Lauerwald, Jörg
(86) Internationale Anmeldenummer: PCT/EP2014/002868
(87) Internationale Veröffentlichungsnummer: WO 2015/074736

(56) Entgegenhaltungen:
- EP-B1- 0 699 572
- DE-A1- 10 011 635

## Beschreibung

Die Erfindung betrifft ein Verfahren zur Erfassung einer Achszuordnung von mindestens einem ersten Druckregler und einem zweiten Druckregler eines elektronisch geregelten Bremssystems eines Fahrzeuges gemäß dem unabhängigen Anspruch 1 und ein elektronisch geregeltes Bremssystem (EBS) für ein Fahrzeug gemäß dem weiteren unabhängigen Anspruch 13 sowie ein Fahrzeug nach Anspruch 16.

Bei den aus dem Stand der Technik bekannten Fahrzeugen mit mehreren Achsen und den dazugehörigen Bremssystemen werden zunehmend identische bzw. baugleiche Achsmodulatoren, insbesondere baugleiche Druckregler für Bremszylinder des Bremssystems, an den verschiedenen Positionen der mehreren Achsen im Fahrzeug verbaut. Bei der Verwendung von identischen oder baugleichen Achsmodulatoren tritt stets die Gefahr auf, dass die einzelnen Achsmodulatoren, insbesondere bei der Fertigung der Fahrzeuge oder bei Werkstattaufenthalten, beim Einbau in das Fahrzeug verwechselt oder vertauscht werden und an der falschen Achse eingebaut werden, so dass die tatsächlich vorliegende Verbauweise im Fahrzeug, insbesondere die Verbaureihenfolge der Achsmodulatoren im Fahrzeug, nicht mit der Verbauweise bzw. der Verbaureihenfolge übereinstimmt, die von der (Steuer)-Software oder Steuereinheit zum Steuern der Achsmodulatoren erwartet wird. Dieser Umstand kann dann während des Fahrbetriebs zu einer Fehlansteuerung oder Fehlregulierung der Achsmodulatoren führen, derart, dass beispielsweise an der hinteren Achse des Fahrzeuges ein zu hoher und an der vorderen Achse ein zu niedriger Bremsdruck vorliegt. Eine solche Ansteuerung kann dann zu einem (auch für den Fahrer) unvorhersehbaren Verhalten des Fahrzeuges führen, im schlimmsten Fall sogar zu einem Unfall des Fahrzeuges.

Aus dem Stand der Technik sind verschiedenste Ansätze bekannt, eine Verwechselung, Vertauschung oder Fehlverbauung der Achsmodulatoren zu verhindern. So ist beispielsweise vorgeschlagen worden, die verschiedenen Achsmodulatoren für verschiedene Bremszylinder des Fahrzeuges, insbesondere für die verschiedenen Achsen, mit unterschiedlichen Steckern, so genannten Kodierungssteckern, zu versehen, so dass ein Fehlverbau ausgeschlossen seien soll.

Auch ist bekannt, die einzelnen Achsmodulatoren konstruktiv verschieden auszugestalten, derart, dass ein bestimmter Achsmodulator nur an einer einzigen Position oder Achse im Fahrzeug eingebaut werden kann.

Die bekannten Lösungen führen aber zu einer großen Vielzahl von konstruktiv unterschiedlichen Achsmodulatoren bzw. Achsmodulatoren mit unterschiedlichen (Kodierungs-) Steckern für einen einzigen Fahrzeugtyp. Die große Anzahl von unterschiedlichen Achsmodulatoren hat dabei den Nachteil, dass hierdurch ein hoher Finanz- und Logistikaufwand für Hersteller und Betreiber von Fahrzeugen entsteht. Hersteller von Achsmodulatoren und Fahrzeugen bevorzugen deshalb identische oder baugleiche Achsmodulatoren, insbesondere Druckregler, für ein(en) Fahrzeug bzw. Fahrzeugtyp.

Hiervon ausgehend wäre es wünschenswert, mittels eines Verfahrens und einer Vorrichtung die Verbauweise, insbesondere die Verbaureihenfolge, baugleicher Achsmodulatoren in einem Fahrzeug, insbesondere die richtige oder falsche Verbauweise/Verbaureihenfolge der Achsmodulatoren im Fahrzeug, im Besonderen der Druckregler, festzustellen. Darüber hinaus wäre es wünschenswert, bei der Feststellung einer falschen Verbauweise/Verbaureihenfolge mögliche Gegenmaßnahmen einzuleiten, um eine Fehlansteuerung zu vermeiden.

Zum Verständnis sei hier noch einmal erwähnt, dass sich zwar um konstruktiv identische oder baugleiche Achsmodulatoren, insbesondere Druckregler, handelt, diese sich jedoch auf Grund ihrer internen Softwareparameter, insbesondere der achs- und/oder radspezifischen Parameter, unterscheiden.

Aus dem Dokument EP 0 937 618 B1 ist ein Verfahren zur Überprüfung einer Bremsanlage eines Fahrzeuges bekannt, bei dem jeder Radbremse eine elektronische Ventilanordnung zugeordnet ist, mit welcher Druck auf-, abgebaut und/ oder konstant gehalten werden kann. Das bekannte Verfahren erfasst hierbei eine Bremswunschvorgabe des Fahrers, die in ein Steuersignal gewandelt und zur Steuerung der Ventilanordnung verwendet wird. Mit dem bekannten Verfahren wird dann ein Selbsttest zu Beginn der Fahrt durchgeführt, derart, dass die Funktionsweise der Ventilanordnung getestet und Fehler erkannt werden sollen. Das bekannte Verfahren zeichnet sich dadurch aus, dass mehrere Testphasen der Ventilanordnung und der Bremsdruckversorgung vorgesehen sind, wobei die erfassten Druckwerte mit Referenz-Druckwerten verglichen werden sollen.

Das Dokument DE 34 15 193 C2 beschreibt ein Verfahren zur Funktionsüberprüfung eines Antiblockiersystems eines Fahrzeuges, welches auf einem Prüfstand mit angetriebenen Rollenpaaren angeordnet ist. Hierbei werden mit dem vorgeschlagenen Verfahren verschiedene (Fahr-)Situationen simuliert, wobei das Fahrzeug zunächst auf eine Geschwindigkeit von 50 km/h bis 70 km/h beschleunigt wird. Parallel wird die Radumfangsgeschwindigkeit mit Hilfe eines Raddrehzahlfühlers erfasst und mit Sollwerten verglichen. Nach dem Erreichen eines bestimmten Fahrgeschwindigkeitswerts wird ein Bremsvorgang simuliert. Hierbei wird die Verzögerung des Fahrzeuges erfasst und mit Soll- und Schwellwerten verglichen wird, wobei hiervon abhängig der Bremsdruck geregelt wird.

Auch aus dem Dokument DE 39 03 071 C2 ist ein Verfahren zur Prüfung der Radgeschwindigkeit mit Hilfe von Geschwindigkeitssensoren eines Antiblockiersystems in einem Fahrzeug auf einem Rollenprüfstand bekannt.

Das Dokument DE 10 2005 024 818 A1 beschreibt ein Verfahren zur Überprüfung von identifizierbaren Geräten in einem Fahrzeug. Hierbei werden Geräteidentifizierungscodes der Geräte mit Sollgeräteidentifizierungscodes, die im Speicher einer Fahrzeugeinheit gespeichert sind, verglichen.

In dem Dokument EP 0 699 572 B1 ist ein Verfahren zur Überprüfung eines Antiblockiersystems eines Fahrzeugs beschrieben. Das bekannte Verfahren prüft, ob die Komponenten des Antiblockiersystems, nämlich Radsensor und Bremsdruckmodulator, an der richtigen Position im Fahrzeug eingebaut sind. Hierfür wird das Fahrzeug zunächst beschleunigt und anschließend wieder gebremst, so dass sich die ABS-Elektronik einschaltet. Die Elektronik erzeugt dann Steuersignale, die an die jeweiligen Sensoren und Modulatoren eines Rades gegeben werden, wobei von einem Anwender geprüft wird, ob die angesteuerten Modulatoren an der richtigen Position verbaut sind.

Aufgabe der Erfindung ist es, ein Verfahren und eine Vorrichtung zur Erfassung einer Achszuordnung von mehreren Achsmodulatoren, insbesondere baugleicher Druckregler eines elektronisch geregelten Bremssystems für ein Fahrzeug, bereitzustellen mit dem es ermöglicht ist eine tatsächliche Achszuordnung, insbesondere eine tatsächliche Verbauweise der Achsmodulatoren im Fahrzeug, zu erkennen. Insbesondere soll dies mit Hilfe einer Messung von Auffälligkeiten einer radbezogenen Fahrstellgröße des Fahrzeuges während des Fahrbetriebes möglich sein.

Diese Aufgabe wird erfindungsgemäß durch das Verfahren nach dem unabhängigen Anspruch 1 und das elektro-pneumatische System nach dem weiteren unabhängigen Anspruch 13, sowie das Fahrzeug nach Anspruch 16 gelöst.

Die Erfindung umfasst den Gedanken eines Verfahrens zur Erfassung einer Achsenzuordnung von mindestens einem ersten Druckregler für einen ersten Bremszylinder und einem zweiten Druckregler für einen zweiten Bremszylinder eines elektronisch geregelten Bremssystems eines Fahrzeuges, wobei der erste Druckregler einer ersten Achse und der zweite Druckregler einer zweiten Achse zugeordnet ist, und der erste und zweite Druckregler baugleich sind, wobei das Verfahren folgende Schritte umfasst:
- Erfassen einer zeitlichen Abfolge einer ersten Störung der Raddrehgeschwindigkeit des Fahrzeuges bei einem Fahrbetrieb für mindestens ein erstes Rad, das der ersten Achse zugeordnet ist;
- Erfassen einer zeitlichen Abfolge einer zweiten Störung der Raddrehgeschwindigkeit des Fahrzeuges bei dem Fahrbetrieb für mindestens ein zweites Rad, das der zweiten Achse zugeordnet ist;
- Vergleichen der zeitlichen Abfolge der ersten und zweiten Störung der Raddrehgeschwindigkeit mit einer Referenzabfolge in einem mit dem ersten und zweiten Druckregler in Verbindung stehenden Fahrzeugelektronik-Modul;
- Auswerten des Vergleiches in dem Fahrzeugelektronik-Modul zur Ermittlung einer Abweichung von der Referenzabfolge; und
- Zuordnen der Abweichung zu einer Zustandsmeldung des Fahrzeuges derart, dass bei Feststellung einer Abweichung eine falsche Verbauweise der Druckregler gemeldet wird.

Weiterhin umfasst die Erfindung den Gedanken eines elektronisch geregelten Bremssystems, insbesondere ausgebildet das erfindungsgemäße Verfahren auszuführen, für ein Fahrzeug mit mindestens einem ersten Druckregler für einen ersten Bremszylinder und einem zweiten Druckregler für einen zweiten Bremszylinder, wobei der erste Druckregler einer ersten Achse und der zweite Druckregler einer zweiten Achse des Fahrzeuges zugeordnet ist, und der erste und zweite Druckregler baugleich sind, wobei das Bremssystem folgende Merkmale aufweist:
- Mittel zum Erfassen einer zeitlichen Abfolge einer ersten Störung der Raddrehgeschwindigkeit des Fahrzeuges bei einem Fahrbetrieb des Fahrzeuges für ein erstes Rad, das der ersten Achse zugeordnet ist;
- Mittel zum Erfassen einer zeitlichen Abfolge einer zweiten Störung der Raddrehgeschwindigkeit des Fahrzeuges bei dem Fahrbetrieb für ein zweites Rad, das der zweiten Achse zugeordnet ist;
- ein Fahrzeugelektronik-Modul, das mit dem ersten und zweiten Druckregler in Verbindung steht und das ausgebildet ist, die erfasste zeitliche Abfolge der Störung der Raddrehgeschwindigkeit mit einer Referenzabfolge zu vergleichen und aus dem Vergleich eine Abweichung von der Referenzabfolge zu ermittelt.

Darüber hinaus umfasst die Erfindung den Gedanken eines Fahrzeuges, dass das erfindungsgemäße elektronisch geregelte Bremssystem umfasst und ausgebildet ist das erfindungsgemäße Verfahren auszuführen.

Mit dem erfindungsgemäßen Verfahren und dem erfindungsgemäßen elektronisch geregelten Bremssystem (EBS) ist es mittels einer Erfassung einer zeitlicher Abfolgen von Fahrstellgrößen während oder beim normalen Fahrbetrieb des Fahrzeuges möglich eine Achsenzuordnung der Druckregler im Fahrzeug zu ermitteln, insbesondere eine tatsächlich vorliegende Verbauweise oder Verbaureihenfolge der Druckregler im Fahrzeug. Hierfür wird die ermittelte zeitliche Abfolge der Fahrstellgröße mit einer Referenzabfolge verglichen und aus dem Vergleich eine Abweichung von der Referenzabfolge ermittelt. Aus der ermittelten Abweichung kann dann auf eine Achsenzuordnung der Druckregler im Fahrzeug geschlossen werden. Mit der Erfindung ist es also möglich - ohne hierfür in eine Werkstatt zu fahren - eine korrekte oder falsche Verbauweise oder Verbaureihenfolge der Druckregler im Fahrzeug zu erkennen.

Im Folgenden wird das Konzept der Erfindung beispielhaft - ohne dabei einschränkend zu sein - beschrieben. Beispielsweise wird bei einer Ausgestaltung der Erfindung eine zeitliche Abfolge einer radbezogenen Fahrstellgröße während oder beim normalen Fahrbetrieb des Fahrzeuges erfasst, insbesondere der Radgeschwindigkeit und/oder der Drehzahl eines Rades oder einer Achse, und mit einer entsprechenden Referenzabfolge der radbezogenen Fahrstellgrö-ße verglichen. Aus dem Vergleich wird ein Auswerteergebnis ermittelt, welches als ein Maß für eine Abweichung zwischen erfasster zeitlicher Abfolge und Referenzabfolge dient. Wenn beispielsweise die Referenzabfolge eine bestimmte Achsenzuordnung der Druckregler repräsentiert, insbesondere eine korrekte Verbauweise oder Verbaureihenfolge des ersten und zweiten Druckreglers im Fahrzeug, nämlich eine Verbauung bei welcher der erste Druckregler der ersten Achse und der zweite Druckregler der zweiten Achse des Fahrzeuges zugeordnet ist, dann erlaubt ein Vergleich eine Aussage darüber, ob die Druckregler korrekt oder falsch im Fahrzeug eingebaut sind.

Wird beispielsweise beim Vergleich der erfassten zeitlichen Abfolge der ersten und zweiten Fahrstellgröße mit der Referenzabfolge für die erste und zweite Fahrstellgröße eine Übereinstimmung bzw. Identität, d. h. keine Abweichung, festgestellt, so liegt die Achsenzuordnung vor, die (auch) von der Referenzabfolge repräsentiert wird, insbesondere also die korrekte Verbauung der Druckregler im Fahrzeug. Wird hingegen eine Abweichung zur Referenzabfolge festgestellt, so muss eine andere Achsenzuordnung vorliegen, insbesondere die falsche Verbauung der Druckregler im Fahrzeug.

Anders ausgedrückt erlaubt das Auswerteergebnis des Vergleiches, als Maß für die Abweichung zwischen erfasster, tatsächlicher Abfolge und Referenzabfolge, eine Aussage darüber, ob die Achsenzuordnung der baugleichen Druckregler im Fahrzeug korrekt oder falsch ist.

Die zeitliche Abfolge von radbezogenen Fahrstellgrößen, insbesondere eine Radgeschwindigkeit, wird beispielsweise während des Überfahrens einer Unebenheit in der Fahrbahn, z. B. einer Bordsteinkante, einem Gullideckel oder Ähnlichem ermittelt. Das Überfahren einer Unebenheit im Asphalt mit dem Fahrzeug wird in der vorliegenden Anmeldung auch als Störung (des normalen Fahrbetriebes) bezeichnet. Durch das Überfahren einer Unebenheit kommt es also zu einer Störung der radbezogenen Fahrstellgröße, insbesondere zu einer Störung der Raddrehgeschwindigkeit. Im normalen Fahrbetrieb, z. B. beim Fahren mit konstanter Geschwindigkeit, verhält sich die Fahrstellgröße, insbesondere die Raddrehgeschwindigkeit, gleichmäßig konstant, wobei sie beim Überfahren einer Unebenheit gestört wird, so dass es beispielsweise zu einer kurzzeitigen Erhöhung und/oder Verringerung der ansonsten gleichmäßig konstanten Fahrstellgröße kommt. Jede individuelle Störung erzeugt dabei ein charakteristisches Aussehen, sozusagen einen Fingerabdruck, der beim Überfahren mit den jeweiligen Achsen oder Rädern des Fahrzeuges (wieder)erkannt und mit der Referenz(abfolge) verglichen werden kann.

Hierdurch ist es möglich, eine Aussage darüber zu geben, in welcher Reihenfolge die einzelnen Achsen und/oder Räder des Fahrzeuges die Störung überfahren. Durch die feste Zuordnung der Räder zu einer bestimmten Achse und damit zu einem bestimmten Druckregler mit den jeweiligen Sensoren sind dann auch Aussagen oder Rückschlüsse über die Position der jeweiligen Druckregler möglich. Überfährt ein Fahrzeug - beim Vorwärtsfahren - ein Hindernis oder eine Störung zuerst mit dem ersten und dann mit dem zweiten Rad, so muss, wenn die Druckregler korrekt verbaut sind, auch die Störung der erfassten radbezogenen Fahrstellgröße, insbesondere die Störung der Radgeschwindigkeit, auch in dieser Reihenfolge auftreten. Wird eine solche erfasste Reihenfolge unter kontrollierten Bedingungen, also bei korrekter Verbauung der Druckregler erfasst, so kann eine solche Abfolge anschließend auch als Referenzabfolge verwendet werden.

Bei einer falschen Verbauweise des ersten und zweiten Druckreglers sieht es für eine Betrachter, Beobachter oder ein Steuersystem demgegenüber so aus, als würde das Hindernis zuerst mit der zweiten und dann mit der ersten Achse des Fahrzeuges überfahren werden. Aus dem Vergleich von erfasster Abfolge und Referenzabfolge (z. B der oben genannten Referenzabfolge) wird wiederum ein Auswerteergebnis als ein Maß für die Abweichung von der Referenzabfolge ermittelt. In diesem Beispiel sind die erfasste Abfolge und die Referenzabfolge verschieden, so dass eine Abweichung festgestellt wird. Anschließend wird die Abweichung einer Zustandsmeldung des Fahrzeuges zugeordnet, in dem vorangehenden Beispiel einem Zustand, der der falschen Verbauweise der Druckregler im Fahrzeug entspricht.

Diese und andere bevorzugte Ausgestaltungsformen der Erfindung sind Gegenstand der Unteransprüche und präzisieren sowohl das Verfahren als auch das elektro-pneumatische System und Fahrzeug.

Eine bevorzugte Ausgestaltungsform sieht vor, dass das Verfahren ein Anzeigen der Zustandsmeldung gegenüber einem Fahrer des Fahrzeuges umfasst. Hierbei ist es in bevorzugter Weise vorgesehen, dass die Zustandsmeldung über ein Anzeigeelement, z. B. eine Signallampe oder einen Bildschirm dem Fahrer angezeigt wird, insbesondere dann wenn eine falsche Verbauweise festgestellt wird, so dass ggf. anschließend notwendige Gegenmaßnamen eingeleitet werden können.

Bevorzugt sieht eine Ausgestaltung vor, dass eine vorgegebene Anzahl (n) von Vergleichen ausgewertet und das jeweilige Auswerteergebnis zugeordnet wird, bevor die Zustandsmeldung angezeigt wird. Hierbei ist es in besonderer Weise vorgesehen, dass mehrere zeitlichen Abfolge beim Überfahren von mehreren Störungen erfasst, mit Referenzabfolge verglichen und die Ergebnisse anschließend gemittelt werden. Hierdurch wird der Einfluss von Messabweichungen oder Messfehlern minimiert und so die Verlässlichkeit des Auswerteergebnisses erhöht. Fehlmessungen können beispielsweise dann auftreten, wenn ein längliches, ausgedehntes Hindernisse schräg oder wenn mehrere Hindernisse gleichzeitig mit dem Fahrzeug überfahren werden.

Eine bevorzugte Weiterentwicklung sieht vor, dass das Erfassen der zeitlichen Abfolge der ersten und zweiten radbezogenen Fahrstellgröße mittels einer Sensorik ausgeführt wird, wobei die Sensorik mindestens einen Drehzahlsensor pro Achse zum Erfassen einer Achs- und/oder einer Raddrehzahl aufweist. Bei dieser Ausgestaltung ist jeder Achse und/oder jedem Druckregler mindestens ein Sensor zugeordnet, insbesondere ein Drehzahl- und/oder Geschwindigkeitssensor, die ausgebildet sind, die Drehzahl und/oder Geschwindigkeit eines Rades zu erfassen. Alternativ kann auch jedem Rad des Fahrzeuges ein Sensor zugeordnet sein, die dann wiederum einer bestimmten Achse und/oder einem bestimmten Druckregler zugeordnet sind. Als Sensoren können alle aus dem Stand der Technik bekannten Sensoren, insbesondere mechanische, optische, elektronische und/oder magnetische Sensoren, eingesetzt sein.

Bei einer vorteilhaften Ausgestaltung kann es vorgesehen sein, dass für das Erfassen der Achs- und/oder der Raddrehzahl die Achs- und/oder Raddrehzahl einen vorgegebenen Schwellwert erreicht hat. Hierbei ist es vorgesehen, dass möglichst hohe Achs- und/oder Raddrehzahlen erfasst werden, da hierdurch die statistische Streuung der Messergebnisse verringert wird. In einer bevorzugten Ausgestaltung wird beispielsweise beim Anfahren des Fahrzeuges, das Erfassen der Achs- und/oder der Raddrehzahl erst ausgeführt, wenn das Fahrzeug eine bestimmte Geschwindigkeit bzw. die Räder oder Achse eine bestimmte Drehzahl erreicht haben, beispielsweise bei einer Geschwindigkeit des Fahrzeuges von größer 10 km/h, bevorzugt von größer 20km/h.

Eine bevorzugte Weiterbildung sieht vor, dass das Erfassen der zeitlichen Abfolge der radbezogenen Fahrstellgröße für alle Räder der ersten und zweiten Achse erfolgt. Hierbei ist es vorgesehen, dass die radbezogenen Fahrstellgrö-ßen, insbesondere die Drehzahl und/oder Geschwindigkeit aller Räder der ersten und zweiten Achse erfasst werden. Hierdurch können beispielsweise die erfassten Fahrstellgrößen seitenweise und/oder achsweise verglichen werden. In einer weiteren Ausgestaltung können so auch andere Kombination der Fahrstellgröße der einzelnen Räder verglichen werden, z. B. Fahrstellgrößen der Räder vorne links mit vorne rechts, hinten links mit hinten rechts, vorne links mit hinten rechts und/oder vorne rechts und hinten links usw. In einem solchen Fall sind die Referenzabfolgen entsprechend angepasst.

Eine andere Weiterbildung kann vorsehen, dass das Fahrzeug mindestens eine weitere Achsen und einen weiteren Druckregler für einen weiteren Bremszylinder sowie einen weiteren Sensor aufweist, welcher der weiteren Achse zugeordnet ist. Hierbei ist es in vorteilhafter Weise vorgesehen, dass das Verfahren auf ein Fahrzeug mit insgesamt drei Achsen und drei Druckreglern übertragen wird. Ohne Einschränkung lässt sich das Verfahren aber auch auf Fahrzeuge mit mehr als drei Achsen, beispielweise Gelenkbusse mit vier oder fünf Achsen, übertragen. Jeder weiteren Achse ist dann immer auch ein weiterer Druckregler und Sensor zugeordnet, mit dem es möglich ist eine dritte, vierte und/oder fünfte radbezogenen Fahrstellgröße des Fahrzeuges zu erfassen und mit einer entsprechend angepassten Referenzabfolge zu vergleichen.

Bevorzugt sieht eine Ausgestaltung vor, dass für das Auswerten des Vergleiches das Auswerteergebnis für die Abweichung von der Referenzabfolge mittels einer Differenz aus der zeitlichen Abfolge der radbezogenen Fahrstellgröße und der Referenzabfolge ermittelt wird. Hierbei ist es in besonderer Weise vorgesehen, dass die Referenzabfolge einen Zustand des Fahrzeuges repräsentiert, nämlich eine korrekte Verbauung der Druckregler, insbesondere des ersten und zweiten Druckreglers, im Fahrzeug. Beispielweise kann - beim Überfahren einer Störung mit dem Fahrzeug - die Zeitdauer zwischen den beiden Zeitpunkten der Störung der ersten und zweiten Achse bestimmt werden. Bei einer Differenzenbildung aus erfasster zeitlicher Abfolge und Referenzabfolge, in diesem Fall also bei einer Differenzenbildung der erfassten Zeitdauer zwischen den Störungen und der erwarteten Zeitdauer zwischen den Störungen aus der Referenzabfolge, wird dann entschieden, ob die erfasste Abfolge für den gleichen Zustand, also die korrekte Verbauung oder für einen anderen Zustand, also die falsche Verbauung der Druckregler steht. Das voran beschriebene Beispiel soll das Prinzip der Differenzenbildung nur verdeutlichen. Es kann hierbei auch vorgesehen sein, komplexere zeitlicher Abfolge, beispielsweise ganze Geschwindigkeits-Zeit-Kurven von einander abzuziehen und zu vergleichen. Hierbei kann beispielsweise mittels verschiedener mathematischer Verfahren, beispielsweise über die Bestimmung von Minimal- und/oder Maximalwerten oder dergleichen, entschieden werden, ob die erfasste zeitliche Abfolge und Referenzabfolge gleich, also den gleichen Zustand repräsentieren, oder ob sie verschieden sind, also unterschiedliche Zustände repräsentieren.

Eine vorteilhafte Ausgestaltungsform betrifft ein Verfahren, das zusätzlich den folgenden Schritt umfasst, nämlich ein Umparametrisieren der ersten, zweiten und/oder des weiteren Druckreglers beim Fahrbetrieb. Dieser Verfahrensschritt wird insbesondere dann ausgeführt, wenn eine falsche Verbauung der Druckregler festgestellt wird. In diesem Fall werden die Druckregler entweder in einer Werkstatt ausgebaut und in korrekter Weise wieder eingebaut oder aber umparametrisiert. Bei dieser bevorzugten Ausgestaltung ist es vorgesehen die falsch verbauten Druckregler umzuparametrisieren, so dass ein Umbau in einer Werkstatt nicht mehr notwendig ist. Hierbei werden die jeweils korrekten Parameter für den ersten, zweiten und/oder weiteren Druckregler vom System vorgegeben und dann dem entsprechend richtigen Druckregler zugeordnet bzw. in einen jeweiligen Speicher des entsprechenden Druckreglers geschrieben, so dass anschließend eine korrekte Verbauung der Druckregler vorliegt.

Eine weitere Ausgestaltungsform sieht vor, dass das Umparametrisieren nach dem Auswerten mittels eines externen elektronischen Eingriffs in einen electrically erasable programmable read only memory (EEPROM) des ersten, zweiten und/oder des weiteren Druckreglers erfolgt. Ein EEPROM ist ein elektronisches Speichermedium/ein Speicherbaustein, dessen gespeicherte Information, insbesondere die Parameter für den ersten, zweiten und/oder weiteren Druckregler, elektrisch gespeichert, gelöscht und/oder überschrieben werden können, wobei der EEPROM mit einem Auswertemodul des elektronisch geregelten Bremssystems (EBS) des Fahrzeuges in Verbindung steht. Die entsprechenden Parameter für den ersten, zweiten und/oder weiteren Druckregler können dabei vom Auswertemodul vorgegeben werden.

Eine besonders vorteilhafte Ausgestaltung sieht vor, dass das Anzeigen der Zustandsmeldung in Form einer Fehlermeldung erfolgt, wenn eine Abweichung größer als ein vorgegebener Schwellwert ist. Hierbei ist es vorgesehen, dass wenn bei dem Vergleich der erfassten zeitlichen Abfolge mit der Referenzabfolge eine Abweichung zur Referenzabfolge festgestellt wird, eine Fehlermeldung, beispielhaft über ein Anzeigeelement, z. B. eine Signallampe oder einen Bildschirm dem Fahrer angezeigt wird, so dass dieser die notwendigen Gegenmaßnahmen vornehmen kann. Die Abweichung ist hierbei bevorzugt größer als ein vorgegebener Schwellwert/eine Schwellverteilung. Hierbei kann es sich bevorzugt auch um einen Schwellwert oder Grenzwert eines Fehlerzählers handeln. Wird nämlich beim Vergleich zwischen der erfassten Verbauweise und der Referenzverbauweise der Druckregler eine Abweichung festgestellt, so kann eine Fehlermeldung ausgegeben werden. Das Verfahren wird dann noch einmal wiederholt, um die festgestellte, falsche Verbauweise zu verifizieren oder gegebenenfalls (danach) zu verwerfen, wobei ein Fehlerzähler bei jedem (Fehler-)Umlauf um +1 erhöht wird. Erreicht der Fehlerzähler einen Fehlergrenzwert, beispielsweise von fünf, sieben oder zehn, wird eine weitere Fehlermeldung ausgegeben, die den Fahrer beispielsweise auffordert eine Werkstatt aufzusuchen.

Eine weitere Ausgestaltung sieht vor, dass die Fehlermeldung durch ein konstantes oder alternierendes Signal erfolgt. Hierbei wird die Fehlermeldung beispielhaft über ein Anzeigeelement, z. B. in Form einer blinkenden Signallampe oder einer Fehlermeldung auf einem Bildschirm, dem Fahrer angezeigt, wenn eine falsche Verbauweise der Druckregler festgestellt wird. Anschließend kann der Fahrer entscheiden welche Gegenmaßnamen eingeleitet werden, z. B. ob eine externe Diagnose in einer Werkstatt notwendig ist.

Weitere Vorteile, Merkmale und Einzelheiten der Erfindung ergeben sich aus der nachfolgenden Beschreibung der bevorzugten Ausführungsbeispiele sowie anhand der folgenden Figuren.

Im Einzelnen zeigen:
- Fig. 1: ein schematisches Ablaufdiagram gemäß einer möglichen Ausgestaltungsform des Verfahrens,
- Fig. 2: eine schematische Darstellung eines Fahrzeuges mit drei Achsen, wobei sich das Fahrzeug in Pfeilrichtung bewegt,
- Fig. 3: eine Messung einer zeitlichen Abfolge der Radgeschwindigkeiten eines Fahrzeuges für drei Räder/Achsen bei einer korrekten Verbauung der Achsmodulatoren im Fahrzeug, und
- Fig. 4: eine Messung einer zeitlichen Abfolge der Radgeschwindigkeiten eines Fahrzeuges für drei Räder bei einer falschen Verbauung der Achsmodulatoren im Fahrzeug.

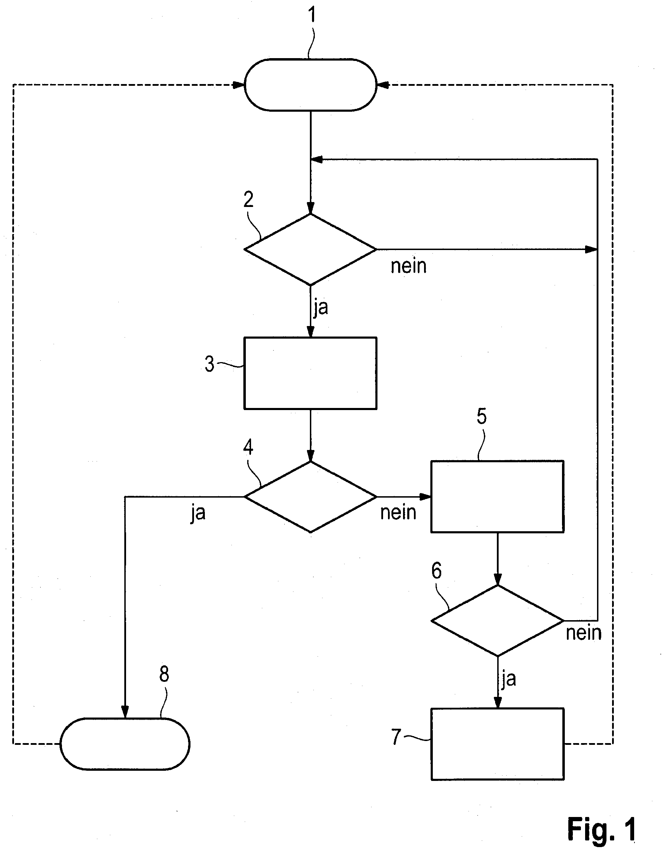

Fig. 1 zeigt ein schematisches Ablaufdiagram gemäß einer möglichen Ausgestaltungsform des Verfahrens zur Erfassung einer Achsenzuordnung von Achsmodulatoren eines elektronisch geregelten Bremssystems eines Fahrzeuges. Das Verfahren beginnt mit dem Aufruf oder Start 1 des Verfahrens. Anschließend wird geprüft, ob die Testbedingungen/Vorrausetzungen für das Verfahren erfüllt sind 2, beispielsweise ob das Fahrzeug sich bewegt oder stillsteht, da das Verfahren nur während des Fahrbetriebes ausgeführt wird. Sind die Bedingungen erfüllt, wird mit dem Verfahren fortgefahren. Anderenfalls wird kontinuierlich eine Prüfroutine/-schleife ausgeführt, welche die Bedingungen/Voraussetzungen kontinuierlich abfragt.

Anschließend wird von einem Fahrzeugelektronik-Modul des Fahrzeuges eine erwartete Verbauweise der Achsmodulatoren, insbesondere die Positionen der einzelnen Druckregler im Fahrzeug, vorgegeben 3. Nachfolgend wird die tatsächliche Verbauweise der Achsmodulatoren ermittelt und beide Verbauweisen miteinander verglichen 4. Mit Hilfe des Vergleichs wird festgestellt, ob die tatsächliche mit der erwarteten Verbauweise der Achsmodulatoren übereinstimmen. Die erwartete Verbauweise der Achsmodulatoren ist beispielsweise in einem Speicher/Memory des Systems gespeichert. Die gespeicherte Verbauweise dient hierbei als eine Referenzverbauweise. Wird bei dem Vergleich 4 zwischen der erfassten tatsächlichen Verbauweise und der Referenzverbauweise eine Identität festgestellt, d. h. sie sind im Wesentlichen identisch oder gleich, dann liegt die korrekte Verbauweise der Druckregler im Fahrzeug vor und das Verfahren wird beendet 8 oder optional zur Überprüfung des Auswerteergebnisses noch einmal wiederholt (gestrichelter Pfeil).

Wird beim Vergleich zwischen der erfassten und der Referenzverbauweise jedoch eine Abweichung festgestellt, so wird eine Fehlermeldung ausgegeben 5. Das Verfahren wird dann noch einmal wiederholt, um die festgestellte, falsche Verbauweise zu verifizieren oder gegebenenfalls (danach) zu verwerfen, wobei ein Fehlerzähler 6 bei jedem (Fehler-)Umlauf um +1 erhöht wird. Erreicht der Fehlerzähler einen Fehlergrenzwert, beispielsweise von fünf, sieben oder zehn, kann eine Umparametrisierung 7 der Achsmodulatoren erfolgen. Anschließend kann wiederum das Verfahren zur Überprüfung der Ergebnisse (nach der Umparametrisierung) noch einmal wiederholt werden (gestrichelter Pfeil).

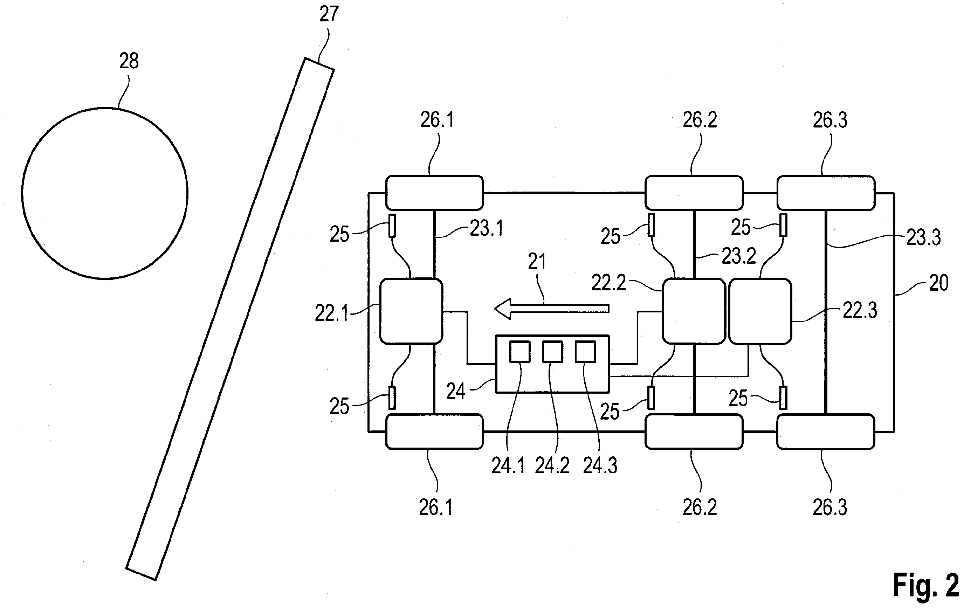

Fig. 2 zeigt eine vereinfachte, schematische Darstellung eines Fahrzeuges 20 (von Unten) mit insgesamt drei Achsen 23.1, 23.2 und 23.3. Ohne Einschränkung lässt sich das Verfahren aber auch auf Fahrzeuge mit mehr oder weniger Achsen übertragen.

In der Fig. 2 ist jeder der Achsen 23.1, 23.2 und 23.3 ein Achsmodulator 22.1, 22.2, 22.3, insbesondere jeweils ein Druckregler für einen Bremszylinder eines elektronisch geregelten Bremssystems des Fahrzeuges 20, zugeordnet. Darüber hinaus sind an jeder Achse 23.1, 23.2 und 23.3 mindestens ein Rad 26.1, 26.2, 26.3 an den jeweils beiden Enden der Achsen 23.1, 23.2 und 23.3 angeordnet. Darüber hinaus ist jeder Achse und/oder jedem Achsmodulator, insbesondere jedem Rad ein Sensor 25 zur Erfassung einer zeitlichen Abfolge einer radbezogenen Fahrstellgröße, beispielsweise der Raddrehgeschwindigkeit, des Fahrzeuges 20 während der Fahrt, zugeordnet. Alternativ oder ergänzend kann auch jeder Achse 23.1, 23.2 und 23.3 ein weiterer Sensor (nicht dargestellt) zugeordnet werden. Bei den Sensoren 25 kann es sich beispielsweise um einen Raddrehzahlmesser handeln, der/die jeweils konfiguriert ist/sind, die Raddrehgeschwindigkeiten eines Rades zu erfassen. Als Sensoren können mechanische, optische, elektronische und/oder magnetische Sensoren zum Einsatz kommen, die konfiguriert sind, Drehzahl- und/oder Geschwindigkeit eines Rades und/oder einer Achse zu erfassen.

Weiterhin umfasst das Fahrzeug 20 eine Fahrzeugelektronik umfassend ein Fahrzeugelektronikmodul 24, dass mit den Achsmodulatoren 22.1, 22.2, 22.3 in Verbindung steht, wobei die Achsmodulatoren wiederum mit den Sensoren 25 verbunden sind, so dass die von den Sensoren 25 erfassten Daten, insbesondere die Raddrehgeschwindigkeiten, an das Fahrzeugelektronikmodul 24 weitergeleitet und dort ausgewertet werden können. Ohne Einschränkung kann das Fahrzeugelektronikmodul 24 beispielweise mit verschiedenen (Unter-)Einheiten, wie einem Speicher 24.1, einem Prozessor 24.2, einem Fehlerzähler 24.3, eine Anzeigeelement usw. gebildet sein, die dann zusammen konfiguriert sind, das Verfahren zur Erfassung der Achsenzuordnung der Achsmodultoren in dem Fahrzeug 20 auszuführen.

Das in der Fig. 2 dargestellte Fahrzeug 20 bewegt sich bzw. fährt in Pfeilrichtung 21. Weiterhin dargestellt sind zwei beispielhafte Hindernisse 27 und 28, die von dem Fahrzeug 20 bei der Weiterfahrt in Pfeilrichtung 21 überfahren werden. Insbesondere handelt es sich bei dem einen Hindernis um ein längliches, ausgedehntes Hindernis 27, beispielweise eine quer zur Fahrrichtung verlaufende Bodenschwelle oder Bordsteinkante, welche beim Überfahren mit allen Rädern 26.1, 26.2, 26.3 des Fahrzeuges 20 beidseitig überfahren wird. Bei dem anderen Hindernis 28 handelt es sich um ein örtlich begrenztes, lokales Hindernis, wie zum Beispiel ein Gullideckel oder Schlagloch im Asphalt der Fahrbahn, das beim Überfahren lediglich von den Rädern 26.1, 26.2, 26.2 einer Seite des Fahrzeuges 20 überfahren wird.

Das Überfahren eines Hindernisses mit dem Fahrzeug 20, sei es nun ein ausgedehntes Hindernis 27 oder ein lokales Hindernis 28, wirkt sich auf den Fahrbetrieb des Fahrzeuges 20, insbesondere auf die Geschwindigkeit der einzelnen Räder, als eine Störung der Radgeschwindigkeit aus, bei welcher beispielsweise die Raddrehgeschwindigkeit zum Zeitpunkt des Überfahren geändert bzw. gestört wird. Diese kurzzeitige Störung der Raddrehgeschwindigkeit wird mit Hilfe der Sensoren 25 erfasst und an das Fahrzeugelektronikmodul 24 weitergeleitet.

Die Störung des Fahrbetriebs des Fahrzeugs tritt an den unterschiedlichen Achsen 23.1, 23.2 und 23.3 beziehungsweise Rädern 26.1, 26.2, 26.2 zu unterschiedlichen Zeitpunkten auf und ergibt eine bestimmte zeitliche Reihen-/ Abfolge. Hierbei wird typischer Weise das Hindernis mit der ersten Achse 23.1 bzw. dem ersten Rad 26.2 als erstes und mit der zweiten Achse 23.2 bzw. dem zweiten Rad 26.2, usw. überfahren. Wird nun beim Überfahren des Hindernisses eine andere Abfolge der Störungen, also ein Unterschied zu einer Referenzabfolge, erfasst, ergibt sich hieraus, dass die Achsmodulatoren - bei sonst gleichen Bedingungen im Fahrzeug - in falscher Reihenfolge im Fahrzeug eingebaut bzw. verbaut sind.

Anders ausgedrückt ergibt sich aus Messung der Radgeschwindigkeiten beim Überfahren eines Hindernisses, insbesondere aus der Messung der Störung der Radgeschwindigkeiten, für die mehreren Achsen des Fahrzeuges eine bestimmte zeitliche Abfolge der Störungen, sozusagen ein bestimmter Fingerabdruck, der eine bestimmte Verbauweise der Achsmodulatoren im Fahrzeug widerspiegelt. Diese erfasster Abfolge, der "Fingerabdruck", kann nun mit einer Referenzabfolge, die bevorzugt die korrekte Verbauweise der Achsmodulatoren im Fahrzeug repräsentiert, verglichen werden. Aus dem Ergebnis des Vergleiches der gemessenen Abfolge mit der Referenzabfolge kann nun ermittelt werden, ob die Achsmodulatoren/Druckregler an der richtigen Position im Fahrzeug 20 eingebaut sind.

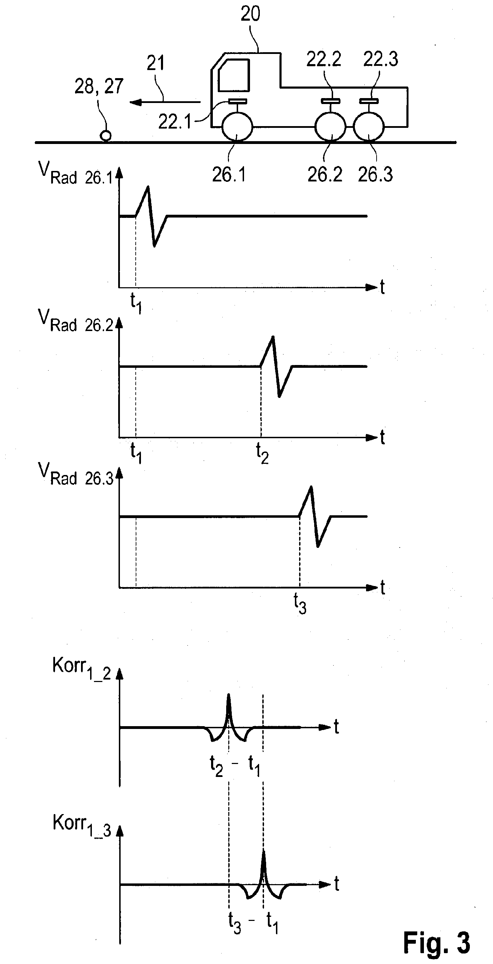

Fig. 3 zeigt (im oberen Teil) eine mögliche Eingangssituation für eine Messung einer zeitlichen Abfolge der Radgeschwindigkeiten (unterer Teil der Fig. 3) eines Fahrzeuges gemäß einer möglichen Ausgestaltungsform der Erfindung, insbesondere aber eine Messung bei einem Fahrzeug mit einer korrekter Verbauung der Achsmodulatoren.

Im oberen Teil in der Fig. 3 ist ein Fahrzeug 20 gezeigt, welches sich in Pfeilrichtung 21 auf ein Hindernis 28, 27 bewegt. Das Fahrzeug 20 umfasst insgesamt drei Achsen, denen jeweils mindestens ein Rad 26.1, 26.2, 26.3 an einem der beiden Enden einer Achse zugeordnet ist. Zusätzlich umfasst jede Achse einen Achsmodulator 22.1, 22.2, 22.3, insbesondere einen Druckregler für einen Bremszylinder. Bei der in der Fig. 3 dargestellten Situation des Fahrzeuges 20 ist der erste Achsmodulator 22.1 der ersten Achse, der zweite Achsmodula-tor 22.2 der zweiten Achse und der dritte Achsmodulator 22.3 der dritten Achse zugeordnet, wobei dem ersten Achsmodulator 22.1 die Parameter für die erste Achse, insbesondere für einen ersten Druckregler für einen ersten Bremszylin-der zugeordnet sind und dem zweiten und dritten Achsmodulator 22.2, 22.3 die entsprechend anderen Parameter für die zweite und dritte Achse des Fahrzeuges. Die in der Fig. 3 dargestellte Situation entspricht in sofern einer korrekten Verbauweise der Achsmodulatoren im Fahrzeug 20.

Mit Hilfe von Sensoren (nicht dargestellt), an jeder der drei Achsen und/oder Räder wird die Geschwindigkeit v_Rad26.1, v_Rad26.2, v_Rad26.3 der Räder 26.1, 26.2, 26.3 in Abhängigkeit von der Zeit t erfasst, wobei die Sensoren wiederum einem bestimmten Achsmodulator oder einer Achse fest zugeordnet sind. Alternativ oder ergänzend können auch die Drehzahl der Räder 26.1, 26.2, 26.3 erfasst werden.

Beim Überfahren des Hindernisses 28, 27 mit dem Fahrzeug 20, wird nun zum Zeitpunkt des Überfahrens des Hindernisses mit der ersten Achse bzw. dem ersten Rad 26.1 die Geschwindigkeit des ersten Rades 26.1 zum Zeitpunkt t_1 (vgl. oberste Geschwindigkeitskurve) gestört, derart, dass diese kurzzeitig erhöht und dann verringert wird, was wiederum mit den Sensoren erfasst wird. Beim weiteren Überfahren wird zum Zeitpunkt t_2 (vgl. mittlere Geschwindigkeitskurve) die Geschwindigkeit des zweiten Rades 26.1 und zum Zeitpunkt t_3 (vgl. unterste Geschwindigkeitskurve) die Geschwindigkeit des dritten Rades 26.3 (in ähnlicher Weise) gestört. Aus den drei Messungen ergibt sich, dass als erstes die erste, dann die zweite und zuletzt die dritte Geschwindigkeit der Räder 26.1, 26.2, 26.3 gestört wurde.

Da die Sensoren zur Erfassung der Radgeschwindigkeit und der Radgeschwindigkeitsstörung sowohl den jeweiligen Achsen bzw. Rädern 26.1, 26.2, 26.3 als auch den jeweiligen Achsmodulator 22.1, 22.2, 22.3 zugeordnet sind, kann - mittels eines Vergleiches mit einer Referenzabfolge - ermittelt werden in wel-cher Reihenfolge die Achsmodulator eingebaut sind. Aus dem Vergleich mit der Referenzabfolge zeigt sich dann, ob die tatsächlichen, erfassten Positionen der Achsmodulatoren korrekt sind. Bei dem in der Fig. 2 gezeigten Fall sind alle drei Achsmodulatoren an den jeweils richtigen Positionen im Fahrzeug eingebaut, so dass die ermittelte Abfolge auch als eine Referenzabfolge für spätere Messungen verwendet werden könnte.

Alternativ oder ergänzend kann aus den drei erfassten Geschwindigkeitskurven für die jeweiligen Räder 26.1, 26.2, 26.3 ein Korrelation/ein Korrelationskurve Korr_1_2, Korr_1_3 bestimmt werden. Eine Korrelation/Korrelationskurve beschreibt die Beziehung zwischen zwei oder mehreren Merkmalen, Ereignissen, Zuständen oder Funktionen oder vorliegend zwischen der ersten und zweiten Störung sowie zwischen der ersten und dritten Störungen der Radgeschwindigkeiten (vgl. die beiden untern (Korrelations-)Kurven in der Fig. 3). Die Korrelation ist im vorliegenden Fall abhängig von dem Achsabstand zwischen erster und zweiter bzw. erster und dritter Achse. Da die erste und zweite Achse einen kleineren Achsabstand als die erste und dritte Achse haben, ist das Maximum der Korrelationskurve für die erste und zweite Achse bei einem kleineren Zeitwert (vgl. obere Korrelationskurve Korr_1_2) als das Maximum der Korrelationskurve (vgl. untere Korrelationskurve Korr_1_3) für die erste und dritte Achse, was insofern für ein korrekte Verbauung der Achsmodulatoren spricht.

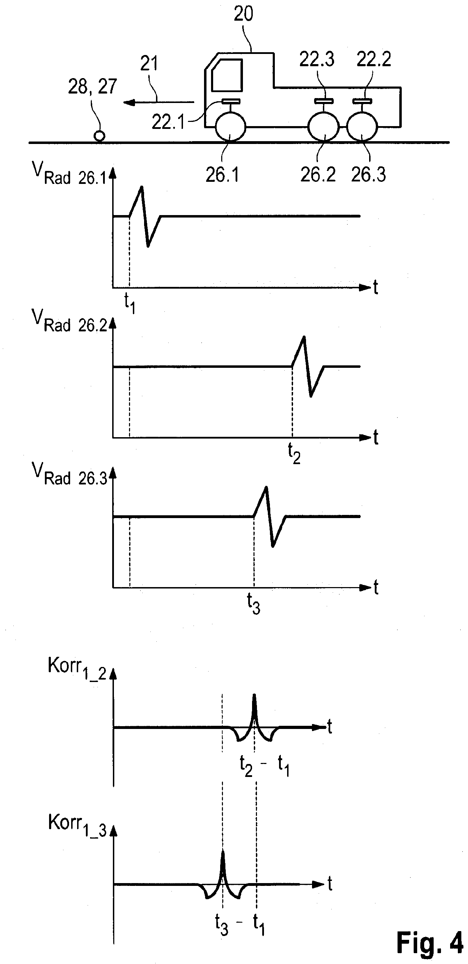

Fig. 4 zeigt eine andere mögliche Ausgangssituation für eine Messung einer zeitlichen Abfolge der Radgeschwindigkeiten eines Fahrzeuges in einer möglichen Ausgestaltungsform der Erfindung, insbesondere aber eine Messung bei einem Fahrzeug mit einer falschen Verbauung der Achsmodulatoren.

Im oberen Teil der Fig. 4 ist wiederum ein Fahrzeug 20 dargestellt, welches sich in Pfeilrichtung 21 auf ein Hindernis 28, 27 bewegt. Auch hier umfasst das Fahrzeug 20 (wie in der Fig. 3) drei Achsen mit jeweils mindestens einem Rad 26.1, 26.2, 26.3 an den beiden Enden einer Achsen. Jeder Achse ist wiederum ein Achsmodulator 22.1, 22.2, 22.3, insbesondere ein Druckregler für einen Bremszylinder, zugeordnet, wobei der erste Achsmodulator 22.1 der ersten Achse, der zweite Achsmodulator 22.2 der dritten Achse und der zweite Achsmodulator 22.3 der dritten Achse zugeordnet ist. Insofern zeigt die in der Fig. 4 dargestellte Situation eine andere, nämlich eine falsche Verbauung der Achsmodulatoren, als die in der Fig. 3 dargestellte Situation. Anderes ausgedrückt zeigt die Fig. 4 eine Messung für ein Fahrzeug 20, bei dem der zweite Achsmodulator 22.2 und dritte Achsmodulators 22.3 vertauscht bzw. in falscher Reihenfolge eingebaut sind.

Die Messung der jeweiligen Radgeschwindigkeiten verläuft in vergleichbare Weise wie bei dem oben beschrieben, insbesondere bei dem in der Fig. 3 dargestellten, Verfahren.

Aus den dargestellten Messungen/Messkurven ergibt sich, dass die Störung des dritten Rades zeitlich vor der Störung des zweiten Rades erfasst wird. In dieser Situation sind die Druckregler also falsch im Fahrzeug verbaut. In diesem Fall wird nun eine Fehlermeldung an den Fahrer ausgegeben, sodass der Fahrer mögliche Gegenmaßnahmen, z. B. ein Werkstattbesuch oder eine Umparametrisierung der Druckregler einleiten kann.

Auch die beiden Korrelationskurven zeigen, dass die Korrelationsfunktion für die erste und zweite Achse (vgl. obere Korrelationskurve Korr_1_2) ein Maximum bei einem höheren Werte hat, als die die Korrelationsfunktion für die erste und dritte Achse (vgl. obere Korrelationskurve Korr_1_3), was jedoch nicht stimmen kann, da die Korrelation ja abhängig von dem Achsabstand zwischen erster und zweiter bzw. erster und dritter Achse ist. Insofern sprechen auch die beiden Korrelationsfunktionen für eine falsche Verbauung der Achsmodulatoren.

### Bezugszeichenliste (Bestandteil der Beschreibung)

- 1: Start
- 2: Prüfe Testbedingungen
- 3: Vorgabe Referenzverbauung
- 4: Vergleich mit erfasster Verbauung
- 5: Fehlermeldung
- 6: Fehlerzähler +1
- 7: Umparametrisierung
- 8: Stopp
- 20: Fahrzeug
- 21: Fahrtrichtung
- 22.1: erster Achsmodulator
- 22.2: zweiter Achsmodulator
- 22.3: dritter Achsmodulator
- 23.1: erste Achse
- 23.2: zweiter Achse
- 23.3: dritte Achse
- 24: Fahrzeugelektronikmodul
- 24.2: Prozessor
- 24.3: Fehlerzähler
- 25: Sensor(en)
- 26.1, 26.2, 26.3: Räder
- 27: ausgedehntes Hindernis
- 28: lokales Hindernis
- t_1: Zeitpunkt der Störung ersten Räder
- t_2: Zeitpunkt der Störung zweiten Räder
- t_3: Zeitpunkt der Störung dritten Räder
- v_Rad_i: Geschwindigkeitskurve
- Korr_i: Korrelationskurve

## Patentansprüche

1. Verfahren zur Erfassung einer Achsenzuordnung von mindestens einem ersten Druckregler (22.1) für einen ersten Bremszylinder und einem zweiten Druckregler (22.2) für einen zweiten Bremszylinder eines elektronisch geregelten Bremssystems eines Fahrzeuges (20), wobei der erste Druckregler (22.1) einer ersten Achse (23.1) und der zweite Druckregler (22.2) einer zweiten Achse (23.2) zugeordnet ist, und der erste und zweite Druckregler (22.1, 22.2) baugleich sind, **dadurch gekennzeichnet, dass** das Verfahren folgende Schritte umfasst:
- Erfassen einer zeitlichen Abfolge einer ersten Störung der Raddrehgeschwindigkeit des Fahrzeuges (20) bei einem Fahrbetrieb für mindestens ein erstes Rad (26.1), das der ersten Achse (23.1) zugeordnet ist;
- Erfassen einer zeitlichen Abfolge einer zweiten Störung der Raddrehgeschwindigkeit des Fahrzeuges (20) bei dem Fahrbetrieb für mindestens ein zweites Rad (26.2), das der zweiten Achse (23.2) zugeordnet ist;
- Vergleichen der zeitlichen Abfolge der ersten und zweiten Störung der Raddrehgeschwindigkeit mit einer Referenzabfolge in einem mit dem ersten und zweiten Druckregler (22.1, 22.2) in Verbindung stehenden Fahrzeug-elektronik-Modul (24);
- Auswerten des Vergleiches in dem Fahrzeugelektronik-Modul (24) zur Ermittlung einer Abweichung von der Referenzabfolge; und
- Zuordnen der Abweichung zu einer Zustandsmeldung des Fahrzeuges (20) derart, dass bei Feststellung einer Abweichung eine falsche Verbauweise der Druckregler (22.1, 22.2) gemeldet wird.

2. Verfahren nach Anspruch 1, **dadurch gekennzeichnet, dass** das Verfahren weiter den folgenden Schritt umfasst:
- Anzeigen der Zustandsmeldung einem Fahrer des Fahrzeuges (20).

3. Verfahren nach Anspruch 1 oder 2, **dadurch gekennzeichnet, dass** eine vorgegebene Anzahl (n) von Vergleichen ausgewertet wird und ein jeweiliges Auswerteergebnis des Vergleiches der Zustandsmeldung zugeordnet wird, bevor die Zustandsmeldung angezeigt wird.

4. Verfahren nach einem der vorhergehenden Ansprüche, **dadurch gekennzeichnet, dass** das Erfassen der zeitlichen Abfolge der ersten und zweiten Störung der Raddrehgeschwindigkeit mittels einer Sensorik ausgeführt wird, wobei die Sensorik mindestens einen Drehzahlsensor (25) pro Achse zum Erfassen einer Achs- und/oder einer Raddrehzahl aufweist.

5. Verfahren nach Anspruch 4, **dadurch gekennzeichnet, dass** für das Erfassen der Achs- und/oder der Raddrehzahl, die Achs- oder Raddrehzahl einen vorgegebenen Schwellwert erreicht hat.

6. Verfahren nach einem der vorhergehenden Ansprüche, **dadurch gekennzeichnet, dass** das Erfassen der zeitlichen Abfolge der Störung der Raddrehgeschwindigkeit für alle Räder der ersten und zweiten Achse (23.1, 23.2) erfolgt.

7. Verfahren nach einem der vorhergehenden Ansprüche, **dadurch gekennzeichnet, dass** das Fahrzeug (20) mindestens eine weitere Achse (23.3) und einen weiteren Druckregler (22.3) für einen weiteren Bremszylinder aufweist, welcher der weiteren Achse (23.3) zugeordnet ist.

8. Verfahren nach einem der vorhergehenden Ansprüche, **dadurch gekennzeichnet, dass** für das Auswerten des Vergleiches das Auswerteergebnis für die Abweichung von der Referenzabfolge mittels einer Differenz aus der zeitlichen Abfolge der Störung der Raddrehgeschwindigkeit und der Referenzabfolge ermittelt wird.

9. Verfahren nach einem der vorhergehenden Ansprüche, **dadurch gekennzeichnet, dass** das Verfahren zusätzlich den folgenden Schritte umfasst:
- Umparametrisieren des ersten, zweiten und/oder des weiteren Druckreglers beim Fahrbetrieb.

10. Verfahren nach Anspruch 9, **dadurch gekennzeichnet, dass** das Umparametrisieren nach dem Auswerten mittels eines externen elektronischen Eingriffs in einen electrically erasable programmable read only memory (EEPROM) des ersten, zweiten und/oder des weiteren Druckreglers erfolgt.

11. Verfahren nach einem der vorhergehenden Ansprüche, **dadurch gekennzeichnet, dass** das Anzeigen der Zustandsmeldung in Form einer Fehlermeldung erfolgt, wenn die Abweichung größer als eine vorgegebener Schwellwert ist.

12. Verfahren nach Anspruch 11, **dadurch gekennzeichnet, dass** die Fehlermeldung durch ein konstantes oder alternierendes Signal erfolgt.

13. Elektronisch geregeltes Bremssystem (EBS), ausgebildet das Verfahren nach einem der vorhergehenden Ansprüche auszuführen, für ein Fahrzeug (20) mit mindestens einem ersten Druckregler (22.1) für einen ersten Bremszylinder und einem zweiten Druckregler (22.2) für einen zweiten Bremszylinder, wobei der erste Druckregler (22.1) einer ersten Achse (23.1) und der zweite Druckregler (22.2) einer zweiten Achse (23.2) des Fahrzeuges (20) zugeordnet ist, und der erste und zweite Druckregler (22.1, 22.2) baugleich sind, **dadurch gekennzeichnet, dass** das Bremssystem folgende Merkmale aufweist:
- Mittel zum Erfassen einer zeitlichen Abfolge einer ersten Störung der Raddrehgeschwindigkeit des Fahrzeuges (20) bei einem Fahrbetrieb des Fahrzeuges (20) für ein erstes Rad (26.1), das der ersten Achse (23.1) zugeordnet ist;
- Mittel zum Erfassen einer zeitlichen Abfolge einer zweiten Störung der Raddrehgeschwindigkeit des Fahrzeuges (20) bei dem Fahrbetrieb für ein zweites Rad (26.2), das der zweiten Achse (23.2) zugeordnet ist;
- ein Fahrzeugelektronik-Modul (24), das mit dem ersten und zweiten Druckregler (22.1, 22.2) in Verbindung steht und das ausgebildet ist, die erfasste zeitliche Abfolge der Störung der Raddrehgeschwindigkeit mit einer Referenzabfolge zu vergleichen und aus dem Vergleich eine Abweichung von der Referenzabfolge zu ermitteln.

14. Elektronisch geregeltes Bremssystem nach Anspruch 13, **dadurch gekennzeichnet, dass**
- das Fahrzeugelektronik-Modul (24) weiter ausgebildet ist, die Abweichung einer Zustandsmeldung des Fahrzeuges (20) zuzuordnen; und
- weiter Mittel vorgesehen sind, die die Zustandsmeldung einem Fahrer des Fahrzeuges (20) anzeigen.

15. Elektronisch geregeltes Bremssystem nach Anspruch 13, **dadurch gekennzeichnet, dass** eine Sensorik vorgesehen ist, wobei die Sensorik mindestens einen Drehzahlsensor (25) pro Achse zum Erfassen einer Achs- und/oder einer Raddrehzahl aufweist.

16. Fahrzeug enthaltend ein elektronisch geregeltes Bremssystem (EBS) nach zumindest einem der Ansprüche 13 bis 15.

## Claims

1. Method for detecting an axle assignment of at least one first pressure controller (22.1) for a first brake cylinder, and of a second pressure controller (22.2) for a second brake cylinder of an electronically controlled brake system of a vehicle (20), wherein the first pressure controller (22.1) is assigned to a first axle (23.1), and the second pressure controller (22.2) is assigned to a second axle (23.2), and the first and second pressure controllers (22.1, 22.2) are structurally identical, **characterized in that** the method comprises the following steps:
- detecting a time sequence of a first disturbance of the wheel speed of the vehicle (20) during a driving operation for at least one first wheel (26.1) which is assigned to the first axle (23.1);
- detecting a time sequence of a second disturbance of the wheel speed of the vehicle (20) during the driving operation for at least one second wheel (26.2) which is assigned to the second axle (23.2);
- comparing the time sequence of the first and second disturbance of the wheel speed with a reference sequence in a vehicle electronic module (24) which is connected to the first and second pressure controllers (22.1, 22.2);
- evaluating the comparison in the vehicle electronic module (24) in order to determine a deviation from the reference sequence; and
- assigning the deviation to a status message of the vehicle (20) in such a way that when a deviation is determined, notification is sent of an incorrect installation arrangement of the pressure controllers (22.1, 22.2).

2. Method according to Claim 1, **characterized in that** the method also comprises the following step:
- displaying the status message to a driver of the vehicle (20).

3. Method according to Claim 1 or 2, **characterized in that** a predefined number (n) of comparisons is evaluated, and a respective evaluation result of the comparison is assigned to the status message before the status message is displayed.

4. Method according to one of the preceding claims, **characterized in that** the detection of the time sequence of the first and second disturbance of the wheel speed is carried out by means of a sensor system,
wherein the sensor system has at least one rotational speed sensor (25) per axle for detecting an axle rotational speed and/or a wheel rotational speed.

5. Method according to Claim 4, **characterized in that** the axle rotational speed or wheel rotational speed has reached a predefined threshold value for the detection of the axle rotational speed and/or the wheel rotational speed.

6. Method according to one of the preceding claims, **characterized in that** the time sequence of the disturbance of the wheel speed is detected for all the wheels of the first and second axles (23.1, 23.2).

7. Method according to one of the preceding claims, **characterized in that** the vehicle (20) has at least one further axle (23.3) and a further pressure controller (22.3) for a further brake cylinder which is assigned to the further axle (23.3).

8. Method according to one of the preceding claims, **characterized in that**, for the evaluation of the comparison, the evaluation result for the deviation from the reference sequence is determined by means of a difference between the time sequence of the disturbance of the wheel speed and the reference sequence.

9. Method according to one of the preceding claims, **characterized in that** the method additionally comprises the following step:
- re-parameterization of the first, second and/or further pressure controller during driving operation.

10. Method according to Claim 9, **characterized in that** the re-parameterization is carried out after the evaluation by means of an external electronic intervention into an electrically erasable programmable read-only memory (EEPROM) of the first, second and/or further pressure controller.

11. Method according to one of the preceding claims, **characterized in that** the status message is displayed in the form of an error message if the deviation is greater than a predefined threshold value.

12. Method according to Claim 11, **characterized in that** the error message is effected by means of a constant or alternating signal.

13. Electronically controlled brake system (EBS), designed to carry out the method according to one of the preceding claims, for a vehicle (20) having at least one first pressure controller (22.1) for a first brake cylinder and one second pressure controller (22.2) for a second brake cylinder, wherein the first pressure controller (22.1) is assigned to a first axle (23.1) and the second pressure controller (22.2) is assigned to a second axle (23.2) of the vehicle (20), and the first and second pressure controllers (22.1, 22.2) are structurally identical, **characterized in that** the brake system has the following features:
- means for detecting a time sequence of a first disturbance of the wheel speed of the vehicle (20) during a driving operation of the vehicle (20) for a first wheel (26.1) which is assigned to the first axle (23.1);
- means for detecting a time sequence of a second disturbance of the wheel speed of the vehicle (20) during the driving operation for a second wheel (26.2) which is assigned to the second axle (23.2);
- a vehicle electronic module (24) which is connected to the first and second pressure controllers (22.1, 22.2) and is designed to compare the detected time sequence of the disturbance of the wheel speed with a reference sequence and to determine a deviation from the reference sequence on the basis of the comparison.

14. Electronically controlled brake system according to Claim 13, **characterized in that**
- the vehicle electronic module (24) is also designed to assign the deviation to a status message of the vehicle (20); and
- further means are provided which display the status message to a driver of the vehicle (20).

15. Electronically controlled brake system according to Claim 13, **characterized in that** a sensor system is provided, wherein the sensor system has at least one rotational speed sensor (25) per axle for detecting an axle rotational speed and/or a wheel rotational speed.

16. Vehicle containing an electronically controlled brake system (EBS) according to at least one of Claims 13 to 15.

## Revendications

1. Procédé de détection d'une association d'essieux d'au moins un premier régulateur de pression (22.1) destiné à un premier cylindre de frein et d'un second régulateur de pression (22.2) destiné à un second cylindre de frein d'un système de freinage à commande électronique d'un véhicule (20), dans lequel le premier régulateur de pression (22.1) est associé à un premier essieu (23.1) et le second régulateur de pression (22.2) est associé à un second essieu (23.2), et les premier et second régulateurs de pression (22.1, 22.2) sont de construction identique, **caractérisé en ce que** le procédé comprend les étapes suivantes consistant à :
- détecter une séquence temporelle d'une première perturbation de la vitesse de rotation des roues du véhicule (20) pendant une opération de roulement pour au moins une première roue (26.1) qui est associée au premier essieu (23.1) ;
- détecter une séquence temporelle d'une seconde perturbation de la vitesse de rotation des roues du véhicule (20) pendant l'opération de roulement pour au moins une seconde roue (26.2) associée au second essieu (23.2) ;
- comparer la séquence temporelle des première et seconde perturbations de la vitesse de rotation des roues avec une séquence de référence dans un module électronique de véhicule (24) relié aux premier et second régulateurs de pression (22.1, 22.2) ;
- évaluer la comparaison dans le module électronique de véhicule (24) pour déterminer un écart par rapport à la séquence de référence ; et
- associer l'écart à un message d'état du véhicule (20) de manière à signaler un mode de montage défectueux des régulateurs de pression (22.1, 22.2) lorsqu'un écart est détecté.

2. Procédé selon la revendication 1, **caractérisé en ce que** le procédé comprend en outre l'étape suivante consistant à :
- présenter le message d'état à un conducteur du véhicule (20).

3. Procédé selon la revendication 1 ou 2, **caractérisé en ce qu'**un nombre prédéterminé (n) de comparaisons est évalué et **en ce qu'**un résultat d'évaluation respectif de la comparaison est associé au message d'état avant que le message d'état soit présenté.

4. Procédé selon l'une des revendications précédentes, **caractérisé en ce que** la détection de la séquence temporelle des première et seconde perturbations de la vitesse de rotation des roues est effectuée au moyen d'un système de capteurs, dans lequel le système de capteurs comporte au moins un capteur de vitesse de rotation (25) par essieu pour détecter une vitesse de rotation d'essieu et/ou de roue.

5. Procédé selon la revendication 4, **caractérisé en ce que**, pour détecter la vitesse de rotation d'essieu et/ou de roue, la vitesse de rotation de l'essieu ou de la roue a atteint une valeur de seuil prédéterminée.

6. Procédé selon l'une des revendications précédentes, **caractérisé en ce que** la détection de la séquence temporelle de la perturbation de la vitesse de rotation des roues est effectuée pour toutes les roues des premier et deuxième essieux (23.1, 23.2).

7. Procédé selon l'une des revendications précédentes, **caractérisé en ce que** le véhicule (20) comporte au moins un autre essieu (23.3) et un autre régulateur de pression (22.3) pour un autre cylindre de frein qui est associé à l'autre essieu (23.3).

8. Procédé selon l'une des revendications précédentes, **caractérisé en ce que**, pour l'évaluation de la comparaison, le résultat de l'évaluation de l'écart par rapport à la séquence de référence est déterminé au moyen d'une différence entre la séquence temporelle de la perturbation de la vitesse de rotation des roues et la séquence de référence.

9. Procédé selon l'une des revendications précédentes, **caractérisé en ce que** le procédé comprend en outre les étapes suivantes consistant à :
paramétrer à nouveau le premier, le second et/ou l'autre régulateur de pression pendant l'opération de roulement.

10. Procédé selon la revendication 9, **caractérisé en ce que** le nouveau paramétrage est effectué après l'évaluation au moyen d'une intervention électronique externe dans une mémoire morte programmable effaçable électriquement (EEPROM) du premier, du deuxième et/ou de l'autre régulateur de pression.

11. Procédé selon l'une des revendications précédentes, **caractérisé en ce que** le message d'état est présenté sous la forme d'un message d'erreur si l'écart est supérieur à une valeur de seuil prédéterminée.

12. Procédé selon la revendication 11, **caractérisé en ce que** le message d'erreur se présente sous la forme d'un signal constant ou alternatif.

13. Système de freinage à commande électronique (EBS), conçu pour mettre en œuvre le procédé selon l'une des revendications précédentes, pour un véhicule (20) comportant au moins un premier régulateur de pression (22.1) destiné à un premier cylindre de frein et un second régulateur de pression (22.2) destiné à un second cylindre de frein, dans lequel le premier régulateur de pression (22.1) est associé à un premier essieu (23.1) et le second régulateur de pression (22.2) est associé à un second essieu (23.2) du véhicule (20), et les premier et second régulateurs de pression (22.1, 22.2) sont de construction identique, **caractérisé en ce que** le système de freinage comporte les éléments caractéristiques suivants :
- des moyens destinés à détecter une séquence temporelle d'une première perturbation de la vitesse de rotation des roues du véhicule (20) pendant une opération de roulement du véhicule (20) pour une première roue (26.1) qui est associée au premier essieu (23.1) ;
- des moyens destinés à détecter une séquence temporelle d'une seconde perturbation de la vitesse de rotation des roues du véhicule (20) pendant l'opération de roulement pour une seconde roue (26.2) qui est associée au second essieu (23.2) ;
- un module électronique de véhicule (24) qui est relié aux premier et second régulateurs de pression (22.1, 22.2) et qui est conçu pour comparer la séquence temporelle détectée de la perturbation de la vitesse de rotation des roue avec une séquence de référence et pour déterminer à partir de la comparaison un écart par rapport à la séquence de référence.

14. Système de freinage à commande électronique selon la revendication 13, **caractérisé en ce que**
- le module électronique de véhicule (24) est en outre conçu pour associer l'écart à un message d'état du véhicule (20) ; et
- il est prévu d'autres moyens destinés à présenter le message d'état à un conducteur du véhicule (20).

15. Système de freinage à commande électronique selon la revendication 13, **caractérisé en ce qu'**il est prévu un système de capteurs, dans lequel le système de capteurs comporte au moins un capteur de vitesse de rotation (25) par essieu pour détecter une vitesse de rotation d'essieu et/ou de roue.

16. Véhicule comportant un système de freinage à commande électronique (EBS) selon au moins l'une des revendications 13 à 15.
